(19) Europäisches Patentamt
European Patent Office
Office européen des brevets

(11) **EP 4 656 265 A1**

(12) **EUROPEAN PATENT APPLICATION**
published in accordance with Art. 153(4) EPC

(43) Date of publication:
**03.12.2025   Bulletin 2025/49**

(21) Application number: **24747220.2**

(22) Date of filing: **19.01.2024**

(51) International Patent Classification (IPC):
**B01D 15/00** (2006.01)       **B01J 20/20** (2006.01)
**B01J 20/28** (2006.01)

(52) Cooperative Patent Classification (CPC):
**B01D 15/00; B01J 20/20; B01J 20/28;** Y02W 30/62

(86) International application number:
**PCT/JP2024/001435**

(87) International publication number:
**WO 2024/157892 (02.08.2024 Gazette 2024/31)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:   **25.01.2023   JP 2023009539**

(71) Applicant: **Kuraray Co., Ltd.
Kurashiki-shi, Okayama 710-0801 (JP)**

(72) Inventors:
• **NAKADA, Haruo
Bizen-shi, Okayama 705-0025 (JP)**
• **TAKAHASHI, Keita
Bizen-shi, Okayama 705-0025 (JP)**
• **IWASAKI, Hideharu
Osaka-shi, Osaka 530-8611 (JP)**

(74) Representative: **Müller-Boré & Partner
Patentanwälte PartG mbB
Friedenheimer Brücke 21
80639 München (DE)**

(54) **NANO-PLASTIC REMOVAL METHOD AND NANO-PLASTIC ADSORBENT**

(57)    An aspect of the present invention relates to a nanoplastics removal method including adsorbing nanoplastics by a moving adsorbent as defined in the present invention, wherein an average particle diameter D50 of the nanoplastics is 100 nm or smaller, and a specific surface area of the adsorbent is 700 m$^2$/g or larger.

EP 4 656 265 A1

**Description**

**Technical Field**

The present invention relates to a method for removing nanoplastics and an adsorbent for adsorbing nanoplastics.

**Background Art**

In recent years, influence of microplastics and nanoplastics to living organisms has become a problem. Small plastic particles have been detected from planktons and bodies of marine organisms. It is suspected that microplastics are concentratedly accumulated in fish in the way of food chain, and people who take seafood collect small plastic particles without noticing. Additionally, it is suspected that minute nanoplastics floating in the air are taken into the body concurrently with breathing, or nanoplastics existing in beverages are taken into the body. Actually, in studies in recent years, some nanoplastics are detected in human blood, which arouses concerns over damages to the health.

Although there is no established definition of microplastics and nanoplastics, microplastics and nanoplastics are classified by size, generally speaking. While microplastics are deemed to have sizes in a range of 100 nm to 5 mm, nanoplastics are deemed to have sizes of 100 nm or smaller. Microplastics can be removed by a normal filter or the like, but nanoplastics cannot be removed at all or can be removed at a poor efficiency by a normal net or filter. In view thereof, Patent Literature 1 discloses a method for removing nanoplastics by use of activated carbon as adsorbent. Further, Non Patent Literature 1 discloses a result of studies on removal of nanoplastics by use of activated carbon. Non Patent Literature 2 discloses a result of studies on removal of nanoplastics by sand filtration or activated carbon filtration.

However, Patent Literature 1 fails to specifically disclose a way of bringing an adsorbent and nanoplastics into contact with one another. The method disclosed in Patent Literature 1 requires an extremely long time to adsorb nanoplastics. Thus, it is difficult to say that Patent Literature 1 discloses a practical adsorption method. Additionally, Non Patent Literatures 1 and 2 do not disclose a technology of removing minute particles or nanoplastics whose average particle diameter D50 is 100 nm or smaller, and which pass through a cell wall or an intercellular gap in a living organism, and do not confirm any effect of the removal of nanoplastics whose average particle diameter D50 is 100 nm or smaller.

In view of the problem described above, an object of the present invention is to provide a nanoplastics removal method that is practical and enables an efficient removal of nanoplastics, and an adsorbent for adsorbing nanoplastics.

**Citation List**

**Patent Literature**

Patent Literature 1: Chinese Unexamined Patent Publication No. 113998757, Specification

**Non Patent Literature**

Non Patent Literature 1: Science of the Total Environment, 2021, Vol. 791, 148175
Non Patent Literature 2: Journal of Hazardous Materials, 2022, Vol. 436, 129011

**Summary of Invention**

The present inventors have diligently studied to solve the problem described above, and have consequently found that the problem described above could be solved by a method including a feature described below, and have completed the present invention by further study based on this finding.

Specifically, a nanoplastics removal method according to an aspect of the present invention includes adsorbing nanoplastics by a moving adsorbent, wherein an average particle diameter D50 of the nanoplastics is 100 nm or smaller, and a specific surface area of the adsorbent is 700 $m^2$/g or larger.

A nanoplastics removal method according to another aspect of the present invention includes causing an adsorbent to adsorb nanoplastics in passing liquid, wherein an average particle diameter D50 of the nanoplastics is 100 nm or smaller, and a specific surface area of the adsorbent is 700 $m^2$/g or larger.

An adsorbent according to still another aspect of the present invention adsorbs nanoplastics whose average particle diameter D50 is 100 nm or smaller. The adsorbent has a specific surface area of 700 $m^2$/g or larger and a hydrophobicity.

## Description of Embodiments

Hereinafter, an embodiment of the present invention will be described. However, the present invention is not limited thereto.

A nanoplastics removal method according to this embodiment includes adsorbing nanoplastics by a moving adsorbent or causing an adsorbent to adsorb nanoplastics in passing liquid, wherein an average particle diameter D50 of the nanoplastics is 100 nm or smaller, and a specific surface area of the adsorbent is 700 $m^2$/g or larger. The method which includes the features is practical and can remove nanoplastics efficiently.

Nanoplastics

Nanoplastics which are removed by adsorption in the present embodiment are not limited to a particular one as long as an average particle diameter D50 of the nanoplastics is 100 nm or less. The nanoplastics are originated in synthetic resin that includes, for example: olefinic synthetic resin such as polyethylene and polypropylene; ester-based synthetic resin such as polyethylene terephthalate and polybutylene terephthalate; nylon-based synthetic resin such as 6-nylon, 6, 6-nylon; acrylic synthetic resin such as PMMA; and composite synthetic resin such as ABS. The nanoplastics may be originated in a single kind or a plurality of kinds among these resins.

In the present embodiment, the average particle diameter D50 indicates a particle diameter which is at 50% in a volume-based cumulative distribution. A value of the average particle diameter D50 of the nanoplastics is a value calculated by disc centrifuge photosedimentation, dynamic light scattering, TEM (transmission electron microscope), or the like.

Adsorbent

Hereinafter, an adsorbent which is used in the nanoplastics removal method according to the present embodiment will be described. The adsorbent is not limited to a particular one as long as the adsorbent is capable of adsorbing the nanoplastics and has a specific surface area of 700 $m^2$/g or larger.

The adsorbent includes, for example, activated carbon, mesoporous carbon, zeolite, mesoporous silica, silica gel, porous metal complexes, and porous metals. The adsorbent may be preferably activated carbon among them.

The adsorbent may have a specific surface area large enough to interact with nanoplastics. The specific surface area is not particularly limited as long as it is 700 $m^2$/g or larger. However, the specific surface area may be preferably in a range of 1155 $m^2$/g to 4000 $m^2$/g, more preferably in a range of 1200 $m^2$/g to 3000 $m^2$/g, and still more preferably in a range of 1250 $m^2$/g to 2500 $m^2$/g. The adsorbent having a specific surface area of 1155 $m^2$/g or larger enables satisfactory adsorption of nanoplastics, thus more reliably ensuring an efficient removal of nanoplastics. The adsorbent having a specific surface area of 4000 $m^2$/g or smaller will not reduce its size while being moved or in passing liquid. Thus, the adsorbent can more reliably have sufficient mechanical strength.

In the present embodiment, a specific surface area indicates a BET specific surface area calculated by nitrogen adsorption. The specific surface area may be measured in a known way. For example, a nitrogen adsorption isotherm measurement is executed and a specific surface area is calculated using the obtained adsorption isotherm. More specifically, a specific surface area may be measured in a way described in Examples.

An average particle diameter D50 of an adsorbent which is used to remove nanoplastics while being moved is not limited to a particular one but may be preferably in a range of 0.1 $\mu$m to 1000 $\mu$m, more preferably in a range of 1 $\mu$m to 500 $\mu$m, still more preferably in a range of 10 $\mu$m to 200 $\mu$m, and further preferably in a range of 10 $\mu$m to 100 $\mu$m. The adsorbent having an average particle diameter D50 of 1000 $\mu$m or smaller has an advantage of enhancing a contact efficiency with adsorbate while being moved, and ensuring an efficient removal method of nanoplastics. The adsorbent having an average particle diameter D50 of 0.1 $\mu$m or greater has an advantage of enhancing the handling of adsorbent.

An average particle diameter D50 of an adsorbent which is used to remove nanoplastics in passing liquid is not limited to a particular one but may be preferably in a range of 0.1 $\mu$m to 1000 $\mu$m, more preferably in a range of 1 $\mu$m to 500 $\mu$m, still more preferably in a range of 10 $\mu$m to 200 $\mu$m, and further preferably in a range of 10 $\mu$m to 100 $\mu$m. The adsorbent having an average particle diameter D50 of 1000 $\mu$m or smaller has an advantage of ensuring an efficient method of removing nanoplastics in passing liquid even under the condition of a short contact time with the adsorbate in liquid. The adsorbent having an average particle diameter D50 of 0.1 $\mu$m or greater has an advantage of ensuring an efficient method of removing nanoplastics in passing liquid that does not involve an increase in a resistance to the liquid passing through the adsorbent.

In the present embodiment, an average particle diameter D50 of the adsorbent is a value calculated on the basis of a particle size distribution (cumulative distribution) measured by laser diffraction-scattering method. The value is measured, for example, by a wet particle size analyzer (Microtrac MT3200) manufactured by MicrotracBel Corp.

The adsorbent preferably has a hydrophobicity. The adsorbent having this feature has an advantage of having a higher affinity with nanoplastics, and thus more easily adsorbs nanoplastics. The hydrophobicity in the present embodiment means a hydrophobicity of not only an outer surface of the adsorbent but also an inner surface of a pore in the adsorbent, i.e., the entire surface of the adsorbent.

The adsorbent preferably has a functional group amount in a range of 0.01 meq/g to 1.2 meq/g, more preferably in a range of 0.05 meq/g to 1.0 meq/g, still more preferably in a range of 0.1 meq/g to 0.8 meq/g in a measurement of Boehm method to have the hydrophobicity. The adsorbent having a functional group amount of 1.2 meq/g or smaller can more reliably cause a hydrophobic interaction with nanoplastics, and thus can efficiently remove nanoplastics. The adsorbent having a functional group amount of 0.01 meq/g or more has an advantage of enabling a sufficient water permeation, and thus can efficiently remove nanoplastics.

Boehm method is a known acid-base titration method. Details on the titration will be described later in Examples. Boehm method can quantify a functional group in terms of a total milliequivalent (meq) of an acidic functional group per unit mass (g) of an adsorbent.

Way of Producing Adsorbent

Although a way of producing an adsorbent used in the nanoplastics removal method according to the present embodiment is not limited to a particular one, a way of producing an activated carbon as an exemplary adsorbent will be described hereinafter.

Raw material for the activate carbon includes, for example, carbonaceous material. The carbonaceous material which is the raw material is not limited to a particular one but includes plant-based carbonaceous material (e.g., plant-originated material such as lumber, wood shavings, charcoal, a fruit shell such as a coconut shell and a walnut shell, a fruit seed, pulping by-products, lignin, and waste molasses), mineral-based carbonaceous material (e.g., mineral-originated material such as peat, lignite, brown coal, bituminous coal, anthracite, coke, coal tar, coal pitch, petroleum residues, petroleum pitch), synthetic resin-based carbonaceous material (e.g., synthetic resin-originated material such as phenolic resin, polyvinylidene chloride, and acrylic resin), and natural fiber-based carbonaceous material (for example, natural fiber-originated material such as a natural fiber, e.g., cellulose, and a regenerated fiber, e.g., rayon). A single kind or two or more kinds among the carbonaceous materials may be used alone or in combination.

The coconut shell or the phenolic resin, which likely provide larger specific surface areas, are preferably used among the carbonaceous materials.

The carbonaceous material may be carbonized and then used. When the carbonization is necessary, the carbonization of the carbonaceous material may be performed in a normal environment or in an environment where oxygen or air is shut off in temperature ranges of substantially 400°C to 800°C, preferably 500°C to 800°C, more preferably 550°C to 750°C, for example. Thereafter, a particle size adjustment may be performed, if necessary.

The carbonaceous material or the carbonized carbonaceous material is activated. The activation is a process that forms pores in a surface of the carbonaceous material, thus transforming the carbonaceous material into activated carbon that has a porous structure. The activation may be performed in a way generally used in the technical field, which is not limited to a particular one but mainly includes two ways, i.e., a gas activation and a chemical activation. Gas activation, which leaves less residual impurities, is preferable for the activated carbon used to remove nanoplastics.

The gas activation (hereinafter, referred to as "a first gas activation" to distinguish from a second gas activation to be described later) is a process of heating carbonaceous material using, for example, a fluidized bed, a multistage furnace, or a rotary kiln under the presence of water vapor, carbon dioxide, air, oxygen, combustion gas or a mixture of these gases. A heating temperature is not limited to a particular temperature but may be properly adjusted, for example, such that the activated carbon has a desired specific surface area. The heating is performed substantially in temperature ranges of preferably 700°C to 1100°C, more preferably 800°C to 980°C, further preferably 850°C to 950°C. An activation time, a temperature increase rate, a gas partial pressure, and a gas feed rate are not limited to a particular one but may be properly regulated according to a kind, a shape, or a size of a selected carbonaceous material such that the activated carbon has a desired specific surface area (700 m$^2$/g or larger), for example. As for the gas partial pressure, for example, gas containing water vapor at a water vapor partial pressure of 10% to 40% is preferably used to carry out the gas activation in consideration of the safety and the reactivity. The total pressure of gas is 1 atm (substantially 0.1 MPa). The gas is fed preferably at a rate in a range of 0.1 L/min to 50 L/min per 100 g of carbonaceous material, for example. The gas fed at a rate within this range allows an activation reaction to proceed more efficiently.

The activated carbon resulting from the first gas activation, hereinafter, referred to as "activated carbon material" to distinguish from an activated carbon resulting from a second gas activation, may be subjected to a further gas activation (second gas activation). In a case where the second gas activation is performed, a step of reducing potassium from and adding calcium to the activated carbon material may be preferably performed before the second gas activation.

The way of reducing potassium is not limited to a particular one, but may include, for example, washing by use of washing liquid containing acid, and replacing potassium with another element (e.g., calcium) by way of ion exchange.

The way of making the activated carbon material contain calcium is not limited to a particular one, but may include, for example, bringing the activated carbon material resulting from the potassium reduction in contact with calcium supply source. Accordingly, the calcium supply source adheres onto a surface and into pores of the activated carbon material. The activated carbon material made to contain calcium preferably has a calcium content in a range of 0.1 mass% to 5 mass%. The calcium content can be calculated in a way described later in Examples.

The way of bringing a calcium supply source in contact with the activated carbon material is not limited to a particular one but may include, for example, spraying an aqueous solution of the calcium supply source onto the activated carbon material, impregnating the activated carbon material with a solution of the calcium supply source, and mixing the activated carbon material with the calcium supply source. Among them, the spraying of the aqueous solution of the calcium supply source onto the activated carbon material is preferable because the spraying enables an easy uniform adhesion of the calcium supply source onto the surface and into the pores of the activated carbon material.

The calcium supply source is not limited to a particular one, but, for example, a water insoluble calcium compound or a water soluble calcium compound may be used. A single kind or two or more kinds among the calcium supply sources may be used alone or in combination.

The second gas activation may be performed in the same way as the way described about the first gas activation using, for example, a fluidized bed, a multistage furnace, or a rotary kiln, in the temperature ranges described above, under the presence of water vapor, carbon dioxide, air, oxygen, combustion gas or a mixture of these gases.

A heating temperature, an activation time, a temperature increase rate, a gas partial pressure, and a gas feed rate in the second gas activation are not limited to a particular one but the same description as the description about the first gas activation may be applied to the second gas activation.

The chemical activation may be performed in a known way, for example, by mixing carbonaceous material with an activation agent including, e.g., zinc chloride, calcium chloride, phosphoric acid, sulfuric acid, sodium hydroxide, potassium hydroxide, magnesium hydroxide, or calcium hydroxide and heating the mixture under an inert atmosphere. An inert gas is not limited to a particular one but includes, for example, nitrogen, argon, helium or a mixture of the gases.

The chemical activation may be performed specifically, for example, in a way disclosed in International Unexamined Patent Application Publication No. 2020/179745.

The activated carbon is preferably hydrophobized or treated to be hydrophobized. The method of hydrophobizing activated carbon is not limited to a particular one but includes, for example, cooling, when the activation is completed, the activated carbon down to a low temperature and taking out the activated carbon so as to avoid oxidation of the activated carbon during the activation, or taking out, when the activation is completed, the activated carbon by switching the feeding of gases such that a nitrogen partial pressure is substantially 1 atm while a total pressure is 1 atm (i.e., under a nitrogen atmosphere). The method of treating activated carbon to be hydrophobized is not limited to a particular one but includes, for example, performing a heat treatment of the activated carbon under a reducing atmosphere or performing a heat treatment under an inert atmosphere. A reducing gas includes, for example, hydrocarbon gases such as hydrogen, carbon monoxide, and methane, and the inert gas includes, for example, argon, nitrogen, and helium.

The activated carbon may be washed and dried if necessary. Specifically, in a case where a plant-based carbonaceous material such as coconut shell or a mineral-based carbonaceous material that contains impurities such as alkali metal, alkaline earth metal or transition metal is used as material for activated carbon, the material may be washed to remove ash content, chemicals, or the like, if necessary. Mineral acid or water is used for washing. As the mineral acid, hydrochloric acid, which provides a high washing efficiency, is preferably used.

The activated carbon may be ground and/or classified, if necessary. Specifically, for example, the activated carbon may be ground and/or classified so as to have a desired average particle diameter D50.

The grinding may be performed using a grinding apparatus that is generally used for grinding activated carbon. The grinding apparatus includes, for example, a high rotation mill such as: an aerofall mill; a rod mill; a roller mill; a hammer mill; a blade mill; and a pin mill, a ball mill, and a jet mill. The classification may be performed in a way generally used for classifying activated carbon including, for example, a classification by use of a sieve, a wet classification, and a dry classification. A wet classifier used for the wet classification includes classifiers by use of principles such as a gravitational classification, an inertial classification, a hydraulic classification, and a centrifugal classification. A dry classifier used for the dry classification includes classifiers by use of principles such as a sedimentary classification, a mechanical classification, and a centrifugal classification.

An activated carbon resulting from such process or a commercially available activated carbon may be in any shape: powdery; granular; fibrous (thread-like, cloth-like, or felt-like); pellet-like; or spherical, and may be properly selected among them according to the use. Among these shapes, the powdery shape, which ensures a high adsorption performance per volume, is preferable.

Nanoplastics Removal Method

The nanoplastics removal method according to the present embodiment includes adsorbing nanoplastics by a moving adsorbent. The moving state is not limited to a particular form, but a state in which the adsorbent is moving is sufficient. For example, a liquid containing nanoplastics is added with the adsorbent and is shaken, resulting in a condition that the adsorbent is moving.

The moving state, i.e., the moving speed, of the moving adsorbent is not limited to a particular one. However, the adsorbent is kept moving generally at a speed in a range of 0.1 cm/s to 100 m/s, preferably in a range of 0.5 cm/s to 90 m/s, more preferably in a range of 1 cm/s to 50 m/s. A moving speed excessively low causes the adsorbate to be dispersed at a speed lower than an adsorption speed. Thus, the supply of the adsorbate is liable to be too scarce for the adsorbent to exert a sufficient adsorption force. A moving speed excessively high causes the adsorbate to pass over a surface of the adsorbent at a speed higher than the adsorption speed. Thus, a sufficient adsorption amount can be hardly secured.

Further, the nanoplastics removal method according to the present embodiment includes causing an adsorbent to adsorb nanoplastics in passing liquid. The passing liquid is not limited to a particular one but a state that the liquid containing nanoplastics is moving while the adsorbent is stationary may be sufficient. For example, the liquid containing nanoplastics to be brought into contact with an adsorbent in a packed bed or an adsorbent molded into a filter by binder may be deemed as "nanoplastics in passing liquid".

The moving state, i.e., the moving speed of the liquid containing nanoplastics is not limited particularly. However, the liquid passes through the adsorbent generally at a speed in a range of 0.1 cm/s to 100 m/s, preferably in a range of 0.5 cm/s to 90 m/s, more preferably in a range of 1 cm/s to 50 m/s. A moving speed excessively low causes the adsorbate to be dispersed at a speed lower than the adsorption speed. Thus, the supply of the adsorbate is liable to be too scarce for the adsorbent to exert a sufficient adsorption force. A moving speed excessively high causes the adsorbate to pass over a surface of the adsorbent at a speed higher than the adsorption speed. Thus, a sufficient adsorption amount can be hardly secured.

In the present embodiment, liquid such as water and ethanol that barely affects the human body is used as the liquid containing nanoplastics. The liquid may contain impurities. The impurities are not limited to particular ones. However, a substance that is gaseous at the room temperature such as carbon dioxide, or a metal salt such as sodium chloride and potassium chloride may be contained in the liquid.

In the present embodiment, a temperature at which nanoplastics are removed is not limited to a particular one, but depends on a pressure at which the removal is performed. However, it is performed generally at an atmospheric pressure at a temperature in a range of 0°C to 100°C, preferably in a range of 1°C to 90°C, more preferably in a range of 4°C to 80°C.

In the present embodiment, as a pressure at which nanoplastics are removed, the removal may be performed either under a reduced pressure or under an increased pressure. A pressure excessively low is not preferable, because the excessively low pressure causes vaporization of liquid, which consequently lowers an adsorption force at a surface of the adsorbent. A pressure excessively high, which requires a specific apparatus, is not preferable, either. Thus, the removal is performed at a pressure generally in a range of 0.1 atm to 5 atm, preferably in a range of 0.5 atm to 3 atm.

Nanoplastics removal amount by per 1 g of adsorbent may be preferably 0.45 mg/g - adsorbent or more, more preferably at 0.5 mg/g - adsorbent or more.

The present specification discloses the technology having various features as described above. Among them, significant features are summarized hereinbelow.

A nanoplastics removal method according to a first aspect includes adsorbing nanoplastics by a moving adsorbent, wherein an average particle diameter D50 of the nanoplastics is 100 nm or smaller, and a specific surface area of the adsorbent is 700 $m^2$/g or larger. The method which includes this feature is practical and can remove nanoplastics efficiently.

A nanoplastics removal method according to a second aspect includes causing an adsorbent to adsorb nanoplastics in passing liquid, wherein an average particle diameter D50 of the nanoplastics is 100 nm or smaller, and a specific surface area of the adsorbent is 700 $m^2$/g or larger. The method which includes this feature is practical and can remove nanoplastics efficiently.

In a nanoplastics removal method according to a third aspect, the adsorbent in the nanoplastics removal method according to the first aspect or the second aspect includes an activated carbon. The method which includes this feature is practical and more reliably enables an efficient removal of nanoplastics.

In a nanoplastics removal method according to a fourth aspect, an average particle diameter D50 of the adsorbent in the nanoplastics removal method according to any one of the first to third aspects is 1000 $\mu$m or smaller. The method which includes this feature can remove nanoplastics in passing liquid efficiently even under the condition of a short contact time between the adsorbent and the nanoplastics contained in the liquid.

In a nanoplastics removal method according to a fifth aspect, the adsorbent in the nanoplastics removal method according to any one of the first to fourth aspects has a hydrophobicity. The adsorbent having this feature has a higher affinity with the nanoplastics, and thus more easily adsorbs the nanoplastics. Therefore, the method is practical and more reliably enables an efficient removal of nanoplastics.

In a nanoplastics removal method according to a sixth aspect, the adsorbent in the nanoplastics removal method according to any one of the first to fifth aspects has a functional group amount of 1.2 meq/g or smaller in a measurement of Boehm method. The adsorbent having this feature can more reliably cause a hydrophobic interaction with the nanoplastics. Thus, the method is practical and more reliably enables an efficient removal of nanoplastics.

An adsorbent according to a seventh aspect is for adsorbing nanoplastics whose average particle diameter D50 is 100 nm or smaller. The adsorbent has a specific surface area of 700 $m^2$/g or larger and a hydrophobicity. The adsorbent having this feature has a higher affinity with the nanoplastics, and thus more easily adsorbs the nanoplastics and efficiently remove the nanoplastics.

In an adsorbent according to an eighth aspect for adsorbing nanoplastics, the adsorbent according to the seventh aspect for adsorbing nanoplastics has a functional group amount of 1.2 meq/g or smaller in a measurement of Boehm method. The adsorbent having this feature can more reliably cause a hydrophobic interaction with the nanoplastics, thus has an advantage of efficiently removing the nanoplastics.

Examples

Hereinafter, the present invention will be further specifically described by means of Examples. However, the scope of the present invention should not be limited thereto.

An average particle diameter D50, a specific surface area, and a functional group amount of an adsorbent to be described later were measured in the following manner.

Way of Measuring Adsorbent

Average Particle Diameter D50

An adsorbent to be measured was mixed with a surfactant and ion-exchanged water to prepare a dispersion. An average particle diameter D50 of the adsorbent was measured using a laser diffraction-scattering particle size analyzer ("MT3200" manufactured by MicrotracBel Corp) in an absorption process. A concentration of the dispersion was adjusted so as to be within an indication range of concentration measurement of the analyzer. "Polyoxyethylene(10) Octylphenyl Ether" manufactured by Wako Pure Chemical Industries, Ltd. was used as the surfactant in the preparation of the dispersion. The surfactant was added in such an amount as to prevent formation of bubbles or the like which is liable to affect the measurement. Conditions for analysis are listed below.

Conditions for analysis
Number of measurements; One
Measurement time; 30 seconds
Distribution Indication; Volume
Particle size classification; standard
Calculation mode; MT3000
Name of Solvent; WATER
Measurement upper limit; 1408 $\mu$m, Measurement lower limit; 0.243 $\mu$m
Residue ratio; 0.00
Pass ratio; 0.00
Residue ratio setting; invalid
Particle permeability; absorption
Particle refractive index; N/A
Particle shape; N/A
Solvent refractive index; 1.333
DV value; 0.0500 to 0.2000
Transmittance (TR); 0.730 to 0.920
Extended filter; invalid
Flow rate; 50%
Ultrasound output; 40W
Ultrasound time; 180 seconds

An average particle diameter D50 means a particle diameter which is at 50% in a volume-based cumulative distribution obtained by the particle size distribution measurement.

Specific Surface Area

An adsorbent to be measured was heated at 300°C for 3 hours under nitrogen gas flow (nitrogen flow rate: 50 mL/min), and a nitrogen adsorption isotherm of the adsorbent was thereafter measured at 77K using BELSORP-mini manufactured by MicrotracBel Corp. A multipoint analysis was performed to the adsorbent based on the obtained adsorption isotherm in BET method. A specific surface area of the adsorbent was calculated from a line of an obtained curve in a relative pressure $P/P_0 = 0.01$ to 0.1.

Functional Group Amount

A surface functional group amount of the adsorbent was measured by a known hydrochloric acid titration method in H. P. Boehm, Advan. Catal., 1966, 16, 179 or the like. Specifically, first, 0.1 N ethanol solution was prepared as a measurement solution using sodium ethoxide manufactured by Kojundo Chemical Laboratory Co., Ltd. Then, 25 mL of the measurement solution was added with 0.5 g of the adsorbent to be measured and stirred at 25°C for 24 hours. After the stirring, the measurement solution and the adsorbent were separated by centrifugal separation, 10 mL of the resulting measurement solution was taken out, and subjected to neutralization titration having a titration end point of pH 4.0 by 0.1 N hydrochloric acid using "888Titrando" manufactured by a Swiss company Metrohm AG, and a sample titration amount was thus obtained. On the other hand, a blank test was performed to a solution not containing a sample, and a blank test titration amount was thus obtained. A surface functional group amount was calculated using Equation (1) below.

Surface Functional Group Amount (meq/g) = {Blank Test Titration Amount (mL) - Sample Titration Amount (mL)} $\times$ 0.1 $\times$ f (Hydrochloric Acid Factor)/Weight (g) of Used adsorbent $\times$ 25 (mL)/10 (mL)    (1)

Adsorbent

Adsorbents used in Examples are described hereinafter.

Adsorbent 1

Bituminous coal was used as a carbonaceous material and was dry distillated at 650°C, and a dry distillation product was thus obtained. Then, 600 g of the obtained dry distillation product was put into a furnace and was activated under a condition of 880°C for 3 hours by feeding into the furnace a gas mixture at a water vapor partial pressure of 15%, a carbon dioxide partial pressure of 11%, a nitrogen partial pressure of 74%, and a total gas pressure of 1 atm and at a flow rate of 80 L/min. Thereafter, the feeding of gases was switched to that of gas at a nitrogen partial pressure of 100%, and was processed at 880°C for 1 hour. The obtained activated product was washed in 1 N hydrochloric acid, desalinated using ion-exchanged water, and then dried at 120°C. The obtained dried product was selected to a specified size by a sieve of 10 to 35 mesh (JIS standard). An adsorbent 1 was thus obtained.

Adsorbent 2

The adsorbent 1 was ground by a ball mill. A powdery adsorbent 2 having D50 = 49.3 $\mu$m was thus obtained.

Adsorbent 3

Char which was made from coconut shell of a coconut grown in Philippines was put into a rotary kiln and activated under a condition of 850°C by feeding propane combustion gas and water vapor at a water vapor partial pressure of 35%. A specific surface area of the obtained activated carbon material was 1141 $m^2$/g.
The activated carbon material was washed in 0.3 N hydrochloric acid, desalinated using ion-exchanged water, and then dried at 120°C. Next, an aqueous solution of calcium nitrate (23 g of calcium nitrate tetrahydrate, 117 g of ion-exchanged water) was sprayed over 500 g of the resulting washed activated carbon, and then the activated carbon was dried at 120°C for 5 to 7 hours by a dryer. Calcium content in the obtained activated carbon containing calcium was measured as described below. It was 0.8 mass%.

Calcium content

First, calibration curves representing potassium content and calcium content were created using a standard liquid of a known concentration.
Next, the activated carbon material having been ground to have an average particle diameter of 20 $\mu$m or smaller was dried at 115 $\pm$ 5°C for 3 hours, and then 0.1 g of the resultant was put in a certain container. Further, 10 mL of nitric acid (60.0 to 62.0 mass%) was added into the container and mixed. The mixture was pre-treated at a temperature of 210°C for 1 hour using microwave sample pre-treatment system ("MARS 6" manufactured by CEM Japan). The activated carbon material was thus decomposed.

The obtained solution was taken out, and added with ion-exchanged water until reaching an amount of 200 mL. A measurement solution was thus prepared. Thereafter, it was analyzed using Multitype ICP Emission Spectrometer ("ICPE-9820" manufactured by Shimadzu Corporation). A metal element concentration was calculated on the basis of the obtained value and the created calibration curves. A calcium content was calculated by the following Equation (2).

$$\text{Calcium content (mass\%)} = ((\text{Calcium concentration [mg/L]} \times 10^{-3} \times 0.2\ [L])/(\text{mass [g] of activated carbon material})) \times 100 \tag{2}$$

Next, 450 g of the obtained activated carbon containing calcium was put in a fluidized bed furnace, and activated under a condition of an activation temperature of 920°C by feeding into the furnace a gas mixture at a water vapor partial pressure of 15%, a carbon dioxide partial pressure of 11%, a nitrogen partial pressure of 74%, and a total gas pressure of 1 atm and at a flow rate of 108 L/min so as to have an activation yield of 18.5%. Thereafter, the feeding of gases was switched to that of gas at a nitrogen partial pressure of 100%, and was processed at 920°C for 1 hour. The obtained activated product was washed in 1 N hydrochloric acid, desalinated using ion-exchanged water, and then dried at 120°C. The adsorbent resulting from the drying was ground by a ball mill. A powdery adsorbent 3 having D50 = 58.6 $\mu$m was thus obtained.

Adsorbent 4

First, 576.9 g (100 parts by mass in dry solid) of pine sawdust (moisture content of 48 mass%) and 564.7 g (160 parts by mass in dry solid (a concentration of 100 mass%)) of phosphoric acid aqueous solution (a concentration of 85 mass%) were mixed (in a mass ratio of phosphoric acid to sawdust (phosphoric acid / sawdust) = 1.6). The mixture was heated by a circulation type dryer set at 175°C in such a way that a ratio of reduction in mass from a reference mass in dry solid (100 parts by mass + 160 parts by mass = 260 parts by mass) comes to 16.0 mass%. The heating was performed for 5 hours, stirring being performed every hour.

The obtained mixed product was put in a tube furnace, and was then oxidized by flowing air at 25 mL/min per 1 g of the mixed product to raise the temperature of the mixed product up to 300°C at an increase of 4°C per minute, and keeping the mixed product for 3 hours.

Next, the mixed product was baked by switching from the air to a gas containing nitrogen at a partial pressure of 100%, and flowing the nitrogen at 25 mL/min per 1 g of the mixed product to raise the temperature of the mixed product up to 500°C at an increase of 4°C per minute, and keeping the mixed product for 2 hours. The resulting baked product was washed with water, dried at 120°C, and then ground by a ball mill, and a powdery adsorbent 4 having D50 = 55.1 $\mu$m was thus obtained.

Adsorbent 5

Char which was made from coconut shell of a coconut grown in Philippines was put into a rotary kiln and activated under a condition of 850°C by feeding propane combustion gas and water vapor at a water vapor partial pressure of 35%. The obtained activated product was ground by a ball mill, and a powdery adsorbent 5 having D50 = 55.3 $\mu$m was thus obtained.

Adsorbent 6

Silica gel "Wakogel LP-60" manufactured by FUJIFILM Wako Pure Chemical Corporation was used as an adsorbent 6. It had D50 = 50.2 $\mu$m.

Table 1 shows a specific surface area, an average particle diameter D50, and a functional group amount of the adsorbents 1 to 6, which were measured in the above-described manner.

[Table 1]

|  | Adsorbent 1 | Adsorbent 2 | Adsorbent 3 | Adsorbent 4 | Adsorbent 5 | Adsorbent 6 |
|---|---|---|---|---|---|---|
| Specific surface area ($m^2$/g) | 1155 | 1155 | 2129 | 1739 | 642 | 504 |
| D50 ($\mu$m) | 1000 | 49.3 | 58.6 | 55.1 | 55.3 | 50.2 |
| Functional group amount (meq/g) | 0.181 | 0.218 | 0.385 | 1.067 | 0.097 | 3.04 |

Test Example 1

Example 1

A nanoplastics removal performance of the moving adsorbent 1 was examined as described below.

First, 1 mL of Size Standard Particle 3020A (standard particle of polystyrene certified average particle size: 23 ± 2nm, dispersion having a particle concentration of 1 wt%) manufactured by Thermo Fisher Scientific Inc. was taken out and filled in a 1L volumetric flask with ultrapure water to thereby prepare a diluted standard particle dispersion having a particle concentration of 0.001%.

Then, 0.5 g of the adsorbent 1 and 100 mL of the diluted standard particle dispersion were put in a 200 mL conical flask and were moved at 25°C for 24 hours (a moving width of 4 cm, a moving frequency of 160 times).

The dispersion that was moved as described above was filtered using a 0.45 $\mu$m syringe filter "Minisart" ® manufactured by Sartorius AG, and the filtrate was collected in centrifuge tubes (50 mL × 2 tubes) made of polypropylene. An absorbance of the collected filtrate was measured around a wavelength of 262 nm by UV absorbance meter "UV-1800" manufactured by Shimadzu Corporation using 10 mm cell, and a concentration of residual polystyrene nanoparticles was calculated by a calibration curve described below. A polystyrene nanoparticles removal amount (mg/g - adsorbent) per 1 g of adsorbent was calculated. In the calculation of the removal amount, the calculation was carried out assuming that a particle density of a polystyrene nanoparticle is 1.05 g/mL.

As a blank test, an absorbance of a diluted standard particle dispersion having a polystyrene nanoparticle concentration of 0.0011% was measured around the wavelength of 262 nm by the UV absorbance meter "UV-1800" manufactured by Shimadzu Corporation using 10 mm cell, and it was 0.025 (Table 2, Blank Test 1).

Way of Creating Calibration Curve

The standard particle dispersion prepared as described above was diluted with ultrapure water to prepare a series of standard solutions. Immediately after that, according to the same operations as those described above, respective absorbances of the standard solutions were measured, respective polystyrene nanoparticle concentrations were calculated, and a calibration curve was created on the basis of the absorbances.

Examples 2 to 4, Comparative Examples 1 to 2

Nanoplastics removal performances of moving adsorbents 2 to 6 were examined in the same manner as Example 1 except that the adsorbents (the adsorbents 2 to 6) shown in Table 2 were used.

Table 2 shows an absorbance around the wavelength of 262 nm, a residual polystyrene nanoparticle concentration, and a nanoplastics removal amount of each of Examples 1 to 4 and Comparative Examples 1 to 2, which were measured and calculated in the above-described manner.

[Table 2]

|  | Example 1 | Example 2 | Example 3 | Example 4 | Comparative Example 1 | Comparative Example 2 | Blank Test 1 |
|---|---|---|---|---|---|---|---|
| Adsorbent | Adsorbent 1 | Adsorbent 2 | Adsorbent 3 | Adsorbent 4 | Adsorbent 5 | Adsorbent 6 | - |
| Absorbance (262 nm) | 0.019 | 0.012 | 0.002 | 0.015 | 0.022 | 0.025 | 0.025 |
| Residual polystyrene nanoparticle concentration | 0.0008% | 0.0005% | 0.0001% | 0.0006% | 0.0009% | 0.0011% | 0.0011% |
| Removal amount (mg/g - adsorbent) | 0.51 | 1.02 | 2.13 | 0.77 | 0.26 | 0 | - |

Comparative Example 3

A nanoplastics removal performance of the adsorbent 1 was examined in a manner that is identical to Example 1 except that it was retained in non-moving at 25°C for 24 hours instead of being moved at 25°C for 24 hours.

Comparative Examples 4 to 6

Nanoplastics removal performances of the adsorbents 2, 5 to 6 were examined in a manner that is identical to Example 1 except that it was retained in non-moving at 25°C for 24 hours instead of being moved at 25°C for 24 hours, and the adsorbents (the adsorbents 2, 5 to 6) shown in Table 3 were used.

As a blank test, an absorbance of a diluted standard particle dispersion having a polystyrene nanoparticle concentration of 0.0009% was measured around the wavelength of 262 nm by the UV absorbance meter "UV-1800" manufactured by Shimadzu Corporation using 10 mm cell, and it was 0.020 (Table 3, Blank Test 2).

Table 3 shows an absorbance around the wavelength of 262 nm, a residual polystyrene nanoparticle concentration, and a nanoplastics removal amount of each of Comparative Examples 3 to 6 which were measured and calculated in the manner similar to that of Example 1.

[Table 3]

|  | Comparative Example 3 | Comparative Example 4 | Comparative Example 5 | Comparative Example 6 | Blank Test 2 |
|---|---|---|---|---|---|
| Adsorbent | Adsorbent 1 | Adsorbent 2 | Adsorbent 5 | Adsorbent 6 | - |
| Absorbance (262 nm) | 0.017 | 0.015 | 0.019 | 0.02 | 0.02 |
| Residual polystyrene nanoparticle concentration | 0.0007% | 0.0006% | 0.0008% | 0.0009% | 0.0009% |
| Removal amount (mg/g - adsorbent) | 0.26 | 0.43 | 0.09 | 0 | - |

Test Example 2

Example 5

To examine a nanoplastics removal performance of the adsorbent 1 in passing liquid, a filtering test was executed using a column made of stainless steel and having a diameter of 6.2 mm, a height of 25.4 mm, and an inner volume of 0.77 mL and filled with 0.46 g of the adsorbent 1.

Specifically, the standard particle dispersion for use in Example 1, that is the diluted standard particle dispersion having a particle concentration of 0.001% obtained by filling 1L volumetric flask with 1 ml of Size Standard Particle 3020A (standard particle of polystyrene certified average particle size: $23 \pm 2$ nm, dispersion having a particle concentration of 1 wt%) manufactured by Thermo Fisher Scientific Inc. and ultrapure water, was used as test solution. The test solution was upwardly passed through the column filled with the adsorbent 1 under a condition of 7.2 mL/min and a space velocity (SV) = 560 $hr^{-1}$.

A dispersion that had been passed in 10 minutes, a dispersion that had been passed in 30 minutes, and a dispersion that had been passed in 60 minutes were respectively filtered using the 0.45 $\mu$m syringe filter "Minisart" ® manufactured by Sartorius AG. The respective filtrates were collected in centrifuge tubes (50 mL × 2 tubes each) made of polypropylene. An absorbance of each of the collected filtrates was measured around the wavelength of 262 nm by the UV absorbance meter "UV-1800" manufactured by Shimadzu Corporation using 10 mm cell. Then, respective residual polystyrene nanoparticle concentrations were calculated using the calibration curve created in Example 1. Additionally, calculation was carried out for a polystyrene nanoparticles removal amount (mg/g - adsorbent) by per 1 g of each of the adsorbents which were respectively used for the 10 minute-passage, 30 minute-passage, and 60 minute-passage. In the calculation of the removal amounts, the calculation was carried out assuming that a particle density of a polystyrene nanoparticle is 1.05 g/mL. Table 4 shows absorbances around the wavelength of 262 nm, residual polystyrene nanoparticle concentrations, and nanoplastic particles removal amounts which were measured and calculated.

[Table 4]

| Liquid passage time | 10 minutes | 30 minutes | 60 minutes |
|---|---|---|---|
| Absorbance (262 nm) | 0 | 0 | 0 |
| Residual polystyrene nanoparticle concentration | 0% | 0% | 0% |

(continued)

| Liquid passage time | 10 minutes | 30 minutes | 60 minutes |
|---|---|---|---|
| Removal amount (mg/g - adsorbent) | 1.57 | 4.70 | 9.39 |

Observations

Tables 1 and 2 show that Examples 1 to 4, which used the moving adsorbents 1 to 4 each having a specific surface area of 700 $m^2$/g or more to remove nanoplastics, succeeded in removing a sufficient amount of nanoplastics.

On the other hand, Comparative Examples 3 and 4, which used the adsorbents 1 to 2 each having a specific surface area of 700 $m^2$/g or more to remove nanoplastics in immovability without shaking, failed to remove a sufficient amount of nanoplastics.

Comparative Examples 1, 2, 5, and 6, which used the adsorbents 5 to 6 each having a specific surface area smaller than 700 $m^2$/g to remove nanoplastics, failed to remove a sufficient amount of nanoplastics both while being moved and in passing liquid.

Tables 1 and 4 show that Example 5, which used the adsorbent 1 having a specific surface area of 700 $m^2$/g or more to remove nanoplastics in passing liquid, succeeded in removing a sufficient amount of nanoplastics.

**Claims**

1. A method for removing nanoplastics, comprising

   adsorbing nanoplastics by a moving adsorbent, wherein
   an average particle diameter D50 of the nanoplastics is 100 nm or smaller, and
   a specific surface area of the adsorbent is 700 $m^2$/g or larger.

2. A method for removing nanoplastics, comprising

   causing an adsorbent to adsorb nanoplastics in passing liquid, wherein
   an average particle diameter D50 of the nanoplastics is 100 nm or smaller, and
   a specific surface area of the adsorbent is 700 $m^2$/g or larger.

3. The method for removing nanoplastics according to claim 1 or 2, wherein the adsorbent includes an activated carbon.

4. The method for removing nanoplastics according to claim 1 or 2, wherein an average particle diameter D50 of the adsorbent is 1000 $\mu$m or smaller.

5. The method for removing nanoplastics according to claim 1 or 2, wherein the adsorbent has a hydrophobicity.

6. The method for removing nanoplastics according to claim 1 or 2, wherein the adsorbent has a functional group amount of 1.2 meq/g or smaller in a measurement of Boehm method.

7. An adsorbent for adsorbing nanoplastics whose average particle diameter D50 is 100 nm or smaller, the adsorbent having a specific surface area of 700 $m^2$/g or larger and a hydrophobicity.

8. The adsorbent according to claim 7, which has a functional group amount of 1.2 meq/g or smaller in a measurement of Boehm method.

## INTERNATIONAL SEARCH REPORT

| International application No. |
|---|
| **PCT/JP2024/001435** |

### A. CLASSIFICATION OF SUBJECT MATTER

***B01D 15/00***(2006.01)i; ***B01J 20/20***(2006.01)i; ***B01J 20/28***(2006.01)i
FI:   B01D15/00 K; B01J20/20 B; B01J20/28 Z

According to International Patent Classification (IPC) or to both national classification and IPC

### B. FIELDS SEARCHED

Minimum documentation searched (classification system followed by classification symbols)

B01D15/00; B01J20/20; B01J20/28

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII); JSTChina (JDreamIII)

### C. DOCUMENTS CONSIDERED TO BE RELEVANT

| Category* | Citation of document, with indication, where appropriate, of the relevant passages | Relevant to claim No. |
|---|---|---|
| X | RAMIREZ ARENAS, Lina et al. Nanoplastics adsorption and removal efficiency by granular activated carbon used in drinking water treatment process. Science of the Total Environment. 15 October 2021, vol. 791, pp.148175/1-12 columns "1. Introduction", "2.1. Materials", "2.3. Experimental procedure", "3.1. PS nanoplastics and activated carbon characterization", table S1 | 1-8 |
| Y | | 2-6 |
| Y | PULIDO-REYES, Gerardo et al. Nanoplastics removal during drinking water teatment: Laboratory- and pilot-scale experiments and modeling. Journal of Hazardous Materials. 15 August 2022, vol. 436, pp. 129011/1-13 column "2. Materials and methods", fig. 5 | 2-6 |
| A | CN 115554995 A (UNIVERSITY EAST CHINA SCIENCE & TECHNOLOGY) 03 January 2023 (2023-01-03) | 1-8 |
| A | CN 114920415 A (RES CT FOR ECO ENVIRONMENTAL SCIENCES CAS) 19 August 2022 (2022-08-19) | 1-8 |

[✓] Further documents are listed in the continuation of Box C.      [✓] See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **13 March 2024** | **02 April 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT

| International application No. |
| --- |
| **PCT/JP2024/001435** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 112755968 A (LANGFANG NORMAL UNIV) 07 May 2021 (2021-05-07) | 1-8 |
| A | US 2022/0212164 A1 (TEKNOLOGIAN TUTKIMUSKESKUS VTT OY) 07 July 2022 (2022-07-07) | 1-8 |
| A | CN 110124618 A (SOUTH CHINA AGRICULTURAL UNIVERSITY) 16 August 2019 (2019-08-16) | 1-8 |
| A | CN 113998757 A (JINAN UNIVERSITY) 01 February 2022 (2022-02-01) | 1-8 |

Form PCT/ISA/210 (second sheet) (July 2022)

**INTERNATIONAL SEARCH REPORT**
Information on patent family members

International application No.

**PCT/JP2024/001435**

| Patent document cited in search report | | | Publication date (day/month/year) | Patent family member(s) | | | Publication date (day/month/year) |
|---|---|---|---|---|---|---|---|
| CN | 115554995 | A | 03 January 2023 | (Family: none) | | | |
| CN | 114920415 | A | 19 August 2022 | (Family: none) | | | |
| CN | 112755968 | A | 07 May 2021 | (Family: none) | | | |
| US | 2022/0212164 | A1 | 07 July 2022 | WO | 2020/225475 | A1 | |
| | | | | EP | 3962995 | A1 | |
| CN | 110124618 | A | 16 August 2019 | (Family: none) | | | |
| CN | 113998757 | A | 01 February 2022 | (Family: none) | | | |

Form PCT/ISA/210 (patent family annex) (July 2022)

## REFERENCES CITED IN THE DESCRIPTION

### Patent documents cited in the description

• CN 113998757

• WO 2020179745 A

### Non-patent literature cited in the description

• *Science of the Total Environment*, 2021, vol. 791, 148175
• *Journal of Hazardous Materials*, 2022, vol. 436, 129011

• **H. P. BOEHM**. *Advan. Catal.*, 1966, vol. 16, 179